# EUROPÄISCHE PATENTSCHRIFT

(11) **EP 1 784 325 B1**
(45) Veröffentlichungstag und Bekanntmachung des Hinweises auf die Patenterteilung: **28.10.2009**
(21) Anmeldenummer: 05769740.1
(22) Anmeldetag: 03.08.2005
(51) Int. Cl.: B60T 5/00, B60T 10/02, B60T 13/74

(54) **BREMSVORRICHTUNG**
BRAKING DEVICE
DISPOSITIF DE FREINAGE

(30) Priorität: 08.09.2004 DE 102004043304
(43) Veröffentlichungstag der Anmeldung: 16.05.2007
(73) Patentinhaber: Voith Turbo GmbH & Co. KG, 89522 Heidenheim (DE)
(72) Erfinder: HÖLLER, Heinz, 74564 Crailsheim (DE)
(74) Vertreter: Dr. Weitzel & Partner
(86) Internationale Anmeldenummer: PCT/EP2005/008390
(87) Internationale Veröffentlichungsnummer: WO 2006/027056

(56) Entgegenhaltungen:
- EP-A- 0 531 721
- GB-A- 1 211 629
- US-A- 3 958 671
- US-A- 5 819 697

## Beschreibung

Die Erfindung betrifft eine Bremsvorrichtung, insbesondere zur Verwendung in relativ kleinen Fahrzeugen, wie Anhängern oder kleinen Lastkraftwagen oder Schienenfahrzeugen.

Heutzutage ist es üblich, Lastkraftwagen oder Schienenfahrzeuge beispielsweise auf Gefällestrecken mit verschleißfreien Dauerbremsen abzubremsen, um die stets zusätzlich vorgesehenen Stellbremsen zu entlasten. Hierbei kommen insbesondere elektrodynamische Retarder, auch Wirbelstrombremsen genannt, oder hydrodynamische Retarder zum Einsatz. Beide dieser verschleißfreien Dauerbremsen verwenden ein Arbeitsmedium, mittels welchem Bremsmoment bzw. Drehmoment von einem durch den abzubremsenden Antriebsstrang angetriebenen Rotor auf einen Stator übertragen wird. Im Fall der Wirbelstrombremse kann der elektrische Strom, welcher verwendet wird, um das elektromagnetische Feld zwischen Rotor und Stator auszubilden, als Arbeitsmedium bezeichnet werden, im Fall des hydrodynamischen Retarders ist das Arbeitsmedium eine Flüssigkeit, beispielsweise ein Hydrauliköl oder auch Wasser, welches in einem torusförmigen Arbeitsraum, der durch den Rotor und den Stator gebildet wird, eine Kreislaufströmung zur Übertragung des Bremsmomentes ausbildet.

In der Regel werden solche Dauerbremsen durch einen externen Öl- oder Wasserkühlkreislauf gekühlt, um die im Bremsbetrieb anfallende Wärme abzuleiten. Im Kühlkreislauf ist ein entsprechender Wärmetauscher angeordnet, um die Wärme, welche von dem Kühlmedium im Bereich des Retarders aufgenommen wird, an die Umgebung oder einen weiteren Kühlkreislauf abzuführen. Im Falle des hydrodynamischen Retarders kann dieser auch in den Fahrzeugkühlkreislauf eingebunden sein, wenn das Kühlmedium des Fahrzeugkühlkreislaufes zugleich das Arbeitsmedium des Retarders ist (beim sogenannten Wasserretarder). Wenn jedoch eine solche verschleißfreie Dauerbremse in einem vergleichsweise kleinen Fahrzeug, beispielsweise einem kleinen Lastkraftwagen oder einem Anhänger, eingesetzt werden soll, so ist in der Regel kein geeigneter Kühlkreislauf vorhanden, um die Dauerbremse im Bremsbetrieb abzukühlen. Das gesonderte Vorsehen eines geeigneten Kühlkreislaufes ist mit derart hohen Kosten und konstruktiven Schwierigkeiten verbunden, dass man in solchen kleinen Fahrzeugen bisher auf den Einsatz von Dauerbremsen verzichtet hat.

Zum druckschriftlichen Stand der Technik wird auf die folgenden Dokumente verwiesen:
GB 1211 629 A
US 5 819 697 A
US 3 958 671 A
EP 0 531 721 A

Der Erfindung liegt die Aufgabe zugrunde, eine Bremsvorrichtung darzustellen, welche kompakt aufgebaut ist und ohne externen Kühlkreislauf auskommt.

Die erfindungsgemäße Aufgabe wird durch eine Bremsvorrichtung mit den Merkmalen des Anspruchs 1 gelöst. Die abhängigen Ansprüche beschreiben besonders vorteilhafte Weiterbildungen der Erfindung, insbesondere in einem Fall die Ausbildung der Bremsvorrichtung als Wirbelstrombremse und in dem anderen Fall die Ausbildung der Bremsvorrichtung als hydrodynamischer Retarder.

Gemäß der erfindungsgemäßen Bremsvorrichtung ist ein Lüfterrad vorgesehen, welches im Bremsbetrieb zugeschaltet wird, um die Bremsvorrichtung mittels eines Kühlluftstromes zu kühlen. Das Lüfterrad kann beispielsweise auf seiner Oberfläche mit Rippen oder Schaufeln versehen sein, welche durch die Rotation des Lüfterrades Kühlluft in Richtung der Bremsvorrichtung, das heißt in Richtung von Rotor und Stator blasen. Die Kühlluft kann über eine außen- und/oder innenliegende Oberfläche der Bremsvorrichtung geleitet werden, um somit mittels Konvektion die in der Bremsvorrichtung erzeugte Wärme aufzunehmen.

Um das Lüfterrad beim Übergang vom Nichtbremsbetrieb zum Bremsbetrieb zuzuschalten und beim Übergang vom Bremsbetrieb zum Nichtbremsbetrieb wegzuschalten, ist eine Kupplung vorgesehen, welche automatisch aktiviert und deaktiviert wird. Unter aktiviert im Sinne der Erfindung ist dabei zu verstehen, dass die Kupplung das Lüfterrad in einer Triebverbindung an den Rotor anschließt; unter deaktiviert ist zu verstehen, dass der Anschluss wieder gelöst wird; so dass das Lüfterrad nicht weiter angetrieben wird, in den Trudelbetrieb übergeht und schließlich stehenbleibt.

Die Aktivierung und Deaktivierung der Kupplung erfolgt automatisch, und zwar insbesondere unmittelbar durch Zufuhr oder Zuschaltung beziehungsweise Abfuhr oder Abschaltung des Arbeitsmediums. Im Falle einer erfindungsgemäß ausgebildeten Wirbelstrombremse kann die Kupplung beispielsweise dadurch aktiviert werden, dass elektrischer Strom durch die Bremsvorrichtung geleitet wird, um das entsprechende Magnetfeld zur Abbremsung zu erzeugen, wobei dieser Strom gleichzeitig zur Aktivierung der Kupplung verwendet wird. Beispielsweise kann die Kupplung elektromagnetisch betätigt werden, insbesondere in Form eines verschiebbaren Kolbens, welcher eine Reibverbindung oder eine mechanische Verriegelung zwischen dem Rotor und dem Lüfterrad herstellt, indem er durch eine Magnetkraft verschoben wird, welches mit der Aktivierung des Bremsstromes erzeugt wird.

Im Falle der Ausbildung der erfindungsgemäßen Bremsvorrichtung als hydrodynamischer Retarder wird die Kupplung vorteilhaft genau dann mit Arbeitsmedium, beispielsweise Öl oder Wasser, druckbeaufschlagt, wenn der Arbeitsraum des Retarders gefüllt wird, um die zur Bremsung erforderliche Kreislaufströmung aufzubauen. Beispielsweise kann über eine Druckleitung, die im Bereich des äußeren Umfanges am Arbeitsraum angeschlossen ist, druckbeaufschlagtes Arbeitsmedium aus dem Arbeitsraum entnommen und auf eine Seite eines verschiebbaren Kolbens geleitet werden, so dass der Druck des Arbeitsmediums den Kolben verschiebt. Durch die Verschiebung des Kolbens kann, ähnlich wie im Fall der beschriebenen Wirbelstrombremse, eine Reibverbindung oder eine mechanische Verriegelung zwischen dem Rotor und dem Lüfterrad hergestellt werden, um die erfindungsgemäße Triebverbindung zwischen Rotor und Lüfterrad im Bremsbetrieb zu erreichen.

Der Kolben, welcher insbesondere mindestens einen Teil der Kupplung ausbildet, kann beispielsweise in Form eines Ringkolbens ausgeführt sein, dessen Mittelachse mit der Drehachse des Rotors zusammenfällt, und welcher in Axialrichtung, das heißt in Richtung der Drehachse des Rotors, verschiebbar ist, um den mechanischen Kuppeleingriff zwischen dem Lüfterrad und dem Rotor herzustellen. Unter mechanischem Kuppeleingriff sind dabei jegliche mechanische Kupplungen zu verstehen, insbesondere Reibkupplungen, Klauenkupplungen, Lamellenkupplungen, Kupplungen durch Bolzeneingriff oder Fliehkraftkupplungen.

Ein Ausführungsbeispiel einer erfindungsgemäßen Bremsvorrichtung, welche als hydrodynamische Kupplung ausgebildet ist, und einen besonders kompakten Aufbau aufweist, wird nachfolgend anhand der Figuren näher beschrieben.

Es zeigen:
- Figur 1: einen Axialschnitt durch eine erfindungsgemäß ausgeführte Bremsvorrichtung;
- Figur 2: eine schematische stirnseitige Ansicht der Bremsvorrichtung aus der Figur 1;
- Figur 3: eine vergrößerte Darstellung des radial inneren Bereiches der Bremsvorrichtung aus der Figur 1, welche insbesondere die Kupplung zeigt.

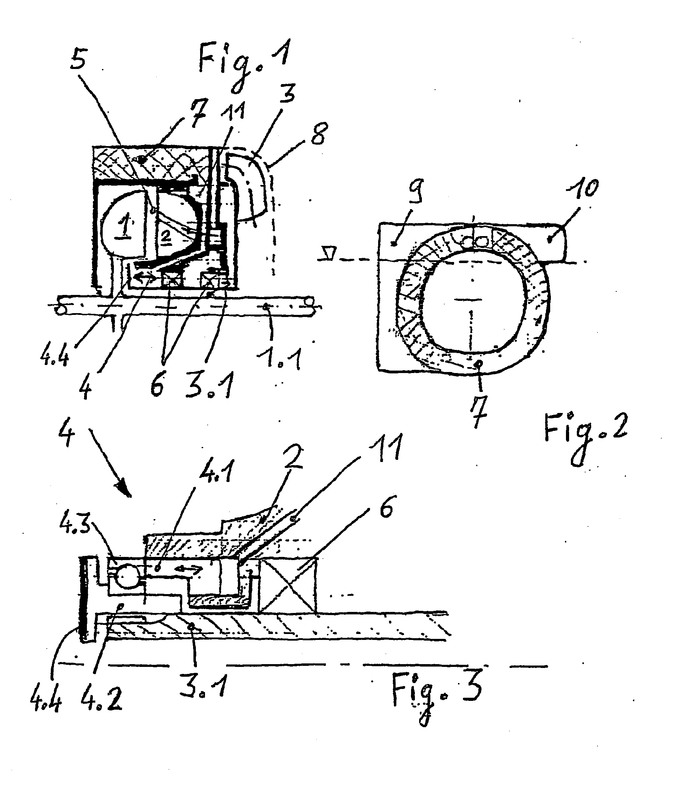

In der Figur 1 erkennt man den Rotor 1 des hydrodynamischen Retarders, welcher eine Rotorwelle 1.1 aufweist, über welcher er drehbar angeordnet ist. Das Schaufelrad des Rotors 1 bildet zusammen mit dem Schaufelrad des Stators 2, welcher den Rotor 1 umschließt, einen torusförmigen Arbeitsraum 5 aus, in welchem im Bremsbetrieb eine Ringströmung aus Arbeitsmedium ausgebildet wird. Dieser Aufbau ist bei Retardern dem Fachmann allgemein bekannt, so dass er keiner weiteren Erläuterung bedarf.

Abweichend vom Stand der Technik weist der Retarder gemäß der Figur 1 jedoch einen Ringwärmetauscher 7 auf, welcher entlang des äußeren Umfangs, das heißt radial außerhalb des Arbeitsraumes 5, angeordnet ist. In diesen Ringwärmetauscher 5 wird das Arbeitsmedium aus dem Arbeitsraum 5 geleitet, dort abgekühlt, und zurück in den Arbeitsraum 5 geleitet. Der Ringwärmetauscher 5 ist somit auf seiner Innenseite, das heißt auf seiner Wärmeaufnahmeseite, mit Arbeitsmedium als Wärmeträger beaufschlagt.

Um die Wärme aus dem Arbeitsmedium in dem Ringwärmetauscher an die Umgebung abzuleiten, wird der Ringwärmetauscher 7 auf seiner Wärmeabgabeseite mit Kühlluft überströmt. Der notwendige Kühlluftstrom wird dabei durch das stirnseitig am Retarder angeordnete Lüfterrad 3 erzeugt, welches gegen einen Eingriff von außen mittels eines Schutzgitters 8 geschützt ist. Das Lüfterrad 3 trägt beispielsweise Rippen oder wie dargestellt Schaufeln, die einen Radial-Axial-Luftstrom erzeugen. Durch die Rotation des Lüfterrads 3 wird die von den Schaufeln "aufgegriffene" Luft radial nach außen beschleunigt und anschließend axial umgelenkt, so dass sie unmittelbar gegen und/oder entlang des Ringwärmetauschers 7 strömt.

Das Lüfterrad 3 wird auf einer Lüfterwelle 3.1 getragen und ist insbesondere integral mit dieser ausgebildet. Dabei ist die Lüfterwelle 3.1, wie man insbesondere in den Figuren 1 und 3 erkennen kann, mittels der Lager 6 im Stator 2 drehbar gelagert. Die Lüfterwelle 3.1 ist als Hohlwelle ausgebildet, welche die Rotorwelle 1.1 umschließt. Die Rotorwelle 1.1 kann beispielsweise außerhalb des Stators 2 oder ebenfalls an dem Stator 2 oder innerhalb des Stators 2 gelagert sein (nicht dargestellt).

Der hydrodynamische Retarder weist, wie in der Figur 2 schematisch dargestellt ist, eine übliche Ansteuerung über den Ölbehälter auf, siehe das Bezugszeichen 9. Mittels Druckluft aus dem Fahrzeugdruckluftsystem wird ein Luftdruck auf das Öl (oder das Wasser) des Retarders, welches das Arbeitsmedium darstellt, aufgebracht, um dieses Arbeitsmedium in den Arbeitsraum zu befördern. Die Luft, welche sich im Nichtbremsbetrieb im Arbeitsraum des Retarders befindet, welcher dann entleert oder teilweise entleert ist, wird Ober ein Abluftsystem 10 abgeleitet, damit Arbeitsraum beim Umschalten vom Nichtbremsbetrieb in den Bremsbetrieb geeignet mit Arbeitsmedium befüllt werden kann.

Selbstverständlich ist es auch möglich, den Retarder anders als durch Druckluft, die insbesondere über ein elektrisch geschaltetes Proportional-Regelventil geregelt wird, einzuschalten. Beispielsweise kann ein elektromotorisch angetriebener Ölkolben verwendet werden, um das Öl (oder das Wasser) in den Arbeitsraum des Retarders zu Beginn des Bremsbetriebs einzubringen.

In der Figur 3 erkennt man insbesondere die Kupplung 4 des erfindungsgemäßen Retarders, welche dazu dient, beim Übergang vom Nichtbremsbetrieb zum Bremsbetrieb das Lüfterrad 3 in eine Triebverbindung mit dem Rotor 1 zu versetzen, so dass das Lüfterrad 3, welches im Nichtbremsbetrieb stillsteht, in eine Drehbewegung versetzt wird, um den gewünschten Kühlluftstrom zu erzeugen. Die Kupplung 4 umfasst einen Ringkolben 4.1, welcher im Querschnitt L-förmig ausgebildet ist, wie man in der Figur 3 sieht, und zwar in der Form eines auf der Seite liegenden Ls, so dass der kurze Schenkel des Ls nach unten zeigt. Der Kolben 4.1 wird auf seiner ersten axialen Stirnseite, in der Figur 3 auf seiner rechten Stirnseite, mit Arbeitsmedium druckbeaufschlagt, welches durch den Kanal 11 zugeführt wird. Der Kanal 11 ist im Stator 2 ausgebildet und mündet in einem den Ringkolben 4.1 in einer Gleitverbindung umschließenden Bereich des Stators 2, welcher derart ausgebildet ist, dass der Kolben 4.1 axial innerhalb des Stators 2 verschiebbar ist und zugleich vom Stator 2, insbesondere ausschließlich vom Stator 2, getragen wird. Auf seiner entgegengesetzten Seite, das heißt auf seiner Einlassseite, kann der Kanal 11 beispielsweise im Bereich des radial äußeren Umfangs des Arbeitsraums 5 münden, wie in der Figur 1 dargestellt ist. Somit wird bei Befüllung des Arbeitsraumes 5 mit Arbeitsmedium, welches im Arbeitsraum durch die Beschaufelung des Rotors 1 radial nach außen beschleunigt wird und am äußeren Umfang in den Stator 2 eintritt, in welchem es radial nach innen verzögert wird, ein Teil des Arbeitsmedium, welches unter einem vergleichsweise hohen Druck steht, abgeleitet, und die genannte Stirnseite des Kolbens 4.1 durch den Kanal 11 mit diesem Arbeitsmedium beaufschlagt. Solange sich der Retarder im Bremsbetrieb befindet, wird dementsprechend ein entsprechend hoher Druck im zumindest teilweise, beispielsweise in seinem Endabschnitt hinter dem Kolben 4.1, als Ringkanal ausgebildeten Kanal 11 vorherrschen, welcher den Kolben 4.1 in seiner ausgerückten Position, in der Figur 3 in seiner linksseitigen Position, hält, und somit die Kupplung 4 in ihrem aktivierten Zustand hält.

Wie in der Figur 1 gezeigt ist, kann gleichzeitig ein Teil des Arbeitsmediums, welches über die Rückwand der Beschaufelung des Stators 2 im Bereich des radial äußeren Umfanges austritt, radial nach außen in den Ringwärmetauscher 7 umgeleitet werden, wo es anschließend abgekühlt wird. Wie man sieht, wird über dieselbe Öffnung bzw. über dieselben Öffnungen in der Rückwand der Statorbeschaufelung auch das Arbeitsmedium abgezogen, das dem Kanal 11 zugeführt wird.

Wiederum mit Bezug auf die Figur 3 ist ein Lager 4.3 dargestellt, welches als Axialkugellager ausgebildet ist, dessen äußerer Lagerring axial an dem Kolben 4.1 angeschlossen ist, so dass er die axiale Verschiebebewegung des Kolbens 4.1 mitmacht. Aufgrund der Art der gleitenden Befestigung des Kolbens 4.1 im Stator 2 wird der Kolben 4.1 und somit der äußere Lagerring des Lagers 4.3 in Umfangsrichtung drehfest gehalten. Es kommt jedoch auch eine Befestigung in Betracht, die eine Drehbewegung von Kolben 4.1 und Lageraußenring ermöglicht.

Das Lager 4.3 weist einen Lagerinnenring auf, welcher an einem Kuppelelement 4.2 angeschlossen ist. Das Kuppelelement 4.2 ist auf der Lüfterwelle 3.1 axial verschiebbar gelagert, vorzugsweise durch eine Verschiebeverzahnung, wie sie beispielsweise schematisch in der Figur 3 dargestellt ist. Dabei steht das Kuppelelement 4.2 in einem Dreheingriff mit der Lüfterwelle 3.1, das heißt, das Kuppelelement 4.2 ist in Umfangsrichtung drehstarr an der Lüfterwelle 3.1 angeschlossen.

Wenn nun der Kolben 4.1 aufgrund der Druckbeaufschlagung durch das Arbeitsmedium eine Verschiebebewegung in seine ausgerückte Position - aktive Position der Kupplung 4 - ausführt, verschiebt er über den äußeren Lagerring des Lagers 4.3, welcher diese Verschiebebewegung über die Lagerkugeln auf den inneren Lagerring weitergibt, das Kuppelelement 4.2 axial auf der Lüfterwelle 3.1. Das Kuppelelement 4.2 wird somit ebenfalls in eine ausgerückte Position hinsichtlich seiner Anordnung auf der Lüfterwelle 3.1 axial verschoben. Stirnseitig ist das Kuppelelement 4.2 mit einem Reibbelag 4.4 versehen, welcher dem Rotor 1 des Retarders zugewandt ist. In seiner ausgerückten Position greift dieser Reibbelag 4.4 in einem Reibschluss an dem Rotor 1 an, wodurch die Drehbewegung des Rotors 1 über den Reibbelag 4.4, das Kuppelelement 4.2 auf die Lüfterwelle 3.1 und somit auf das gesamte Lüfterrad 3 übertragen wird. Dementsprechend läuft das Lüfterrad 3 bei geschlossener Reibkupplung zwischen dem Lüfterrad 3 und dem Rotor 1 mit der Geschwindigkeit oder annähernd mit der Geschwindigkeit des Rotors um. Der aktive Zustand der Kupplung 4 ist erreicht und der Retarder wird im Bremsbetrieb durch den vom Lüfterrad 3 erzeugten Luftstrom gekühlt.

Beim Übergang vom Bremsbetrieb in den Nichtbremsbetrieb wird sich der Druck im Arbeitsmedium an der Anschlussstelle des Kanals 11 am Arbeitsraum 5 abbauen, wodurch die stirnseitige Druckbeaufschlagung des Kolbens 4.1 durch das Arbeitsmedium nachlässt. Der Kolben wird durch eine beispielsweise mittels einer Feder (nicht dargestellt) oder anderweitig erzeugten Axialkraft, die der Druckbeaufschlagung durch das Arbeitsmedium entgegenwirkt, in seine eingerückte Position, das heißt in die inaktive Position der Kupplung 4, verschoben, in der Figur 3 in seine rechtsseitige Position. Dabei ist es auch denkbar, dass der Gegendruck ebenfalls durch Arbeitsmedium erzeugt wird, welches an einer geeigneten Stelle des Arbeitsmediumkreislaufes, die im Übergang vom Bremsbetrieb zum Nichtbremsbetrieb einen höheren Druck aufweist als die Anschlussstelle des Kanals 11, abgegriffen wird.

Aufgrund der Axialbewegung, welche der Kolben 4.1 beim Übergang vom Bremsbetrieb zum Nichtbremsbetrieb ausführt, wird, wie leicht verständlich ist, auch das Kuppelelement 4.2 in seine axial eingerückte Position bewegt, das heißt es führt bei einer Ausführung, wie sie in der Figur 3 dargestellt ist, eine Axialbewegung nach rechts durch. Durch diese Einrückbewegung des Kuppelelements 4.2 beim Übergang der Kupplung 4 aus ihrer aktiven Position in die inaktive Position wird der Reibbelag 4.4 aus einem Eingriff mit dem Rotor 1 gebracht, wodurch die Antriebskraft auf die Lüfterwelle 3.1 wegfällt. Somit gerät das Lüfterrad 3 in einen Trudelbetrieb und bleibt schließlich stehen.

Um diesen Ausschaltvorgang der Luftkühlung durch das Lüfterrad 3 zu verzögern, kann im Bereich des Kanals 11, das heißt zwischen dem Kolben 4.1 und dem Arbeitsraum 5, ein Druckspeicher (nicht dargestellt) vorgesehen sein, welcher den Druckabfall in dem den Kolben 4.1 beaufschlagenden Arbeitsmedium verzögert. Dadurch wird erreicht, dass der Kolben 4.1 aufgrund des länger herrschenden Aktivierungsdruckes durch das Arbeitsmedium erst verzögert aus seiner ausgerückten in seine eingerückte Position gleitet, und dass dieser somit die Triebverbindung zwischen Rotor 1 und Lüfter 3 erst einen vorgegebenen Zeitpunkt nach dem Ausschalten des Retarders löst. Es findet somit über eine gewisse Zeitspanne eine Nachbelüftung des Retarders durch den vom Lüfterrad 3 erzeugten Luftstrom statt.

Gemäß einer besonderen Ausführung der Erfindung, können weitere Aggregate mittels der erfindungsgemäßen Kupplung 4 automatisch beim Übergang vom Nichtbremsbetrieb zum Bremsbetrieb in einer Triebverbindung an den Rotor 1 gekoppelt werden und beim Übergang vom Bremsbetrieb zum Nichtbremsbetrieb wiederum aus dieser Triebverbindung gelöst werden. Solche Aggregate können beispielsweise Verbraucher sein, deren Zuschaltung nur im Bremsbetrieb gewünscht wird, oder bestimmte Hilfsantriebe, die ausschließlich im Bremsbetrieb arbeiten sollen. Schließlich können auch Messvorrichtungen, beispielsweise ein Laufrad einer Geschwindigkeitsmessvorrichtung, über die Kupplung 4 im Bremsbetrieb an den Rotor 1 angekuppelt werden.

Die erfindungsgemäße Bremsvorrichtung weist verschiedene Vorteile auf: So ist sie zunächst aufgrund ihrer kompakten Bauweise, die keinen externen Kühlreislauf erfordert, auch für kleinere Fahrzeuge wie Anhänger oder kleine Lastkraftwagen geeignet. Insbesondere kommt die Ausführung eines Wohnmobils oder eines Wohnanhängers mit einer erfindungsgemäßen Bremsvorrichtung, wie sie hier beschrieben worden ist, in Betracht. Die Verwendung der erfindungsgemäßen Bremsvorrichtung in einem solchen Wohnmobil oder Wohnanhänger ermöglicht es, diese Fahrzeuge, welche bisher aufgrund der Kostensituation ohne jegliche verschleißfreie Dauerbremsen auskommen mussten, mit einer kostengünstigen verschleißfreien Dauerbremse zu versehen und somit die ohnehin vorgesehenen Stellbremsen zu entlasten und die Lebensdauer der letzteren zu verlängern.

Aufgrund der Verwendung eines berippten oder beschaufelten Lüfterrades wird eine zusätzliche Bremswirkung erzeugt. Bisher bedeutete jede zusätzliche Bremswirkung eine Zunahme des abzuleitenden Wärmestromes aus dem Retarder. Gemäß der vorliegenden Erfindung hingegen wird gleichzeitig zusätzliche Bremswirkung erzeugt und der Retarder aktiv gekühlt.

Schließlich wird im Nichtbremsbetrieb keine oder eine nur geringfügige Verlustleistung erzeugt, da das Lüfterrad im Nichtbremsbetrieb stillsteht. Gleichzeitig erfolgt die Aktivierung des Lüfterrades beim Übergang vom Nichtbremsbetrieb zum Bremsbetrieb und die Deaktivierung derselben beim Übergang vom Bremsbetrieb zum Nichtbremsbetrieb ohne zusätzlichen Energieaufwand vollständig automatisch durch die ohnehin im System vorhandene Energie.

## Patentansprüche

1. Bremsvorrichtung
1.1 mit einem Rotor (1) und einem Stator (2);
1.2 der Rotor (1) und der Stator (2) sind derart relativ zueinander angeordnet und ein Arbeitsmedium ist derart zuführbar oder zuschaltbar, dass im Bremsbetrieb bei zugeführtem oder zugeschaltetem Arbeitsmedium Bremsmoment von dem Rotor (1) auf den Stator (2) übertragen wird;
**gekennzeichnet durch** die folgenden Merkmale:
1.3 es ist ein Lüfterrad (3) vorgesehen, das mittels Aktivierung und Deaktivierung einer Kupplung (4) in eine und aus einer Triebverbindung mit dem Rotor (1) schaltbar ist;
1.4 das Lüfterrad (3) ist derart aufgebaut und positioniert, dass es in geschalteter Triebverbindung mit dem Rotor (1) einen Kühlluftstrom der Bremsvorrichtung zuführt;
1.5 die Kupplung (4) ist derart angeordnet und mit dem Arbeitsmedium beaufschlagt, dass die Zufuhr oder Zuschaltung und Abfuhr oder Abschaltung des Arbeitsmediums die Kupplung (4) automatisch aktiviert und deaktiviert.

2. Bremsvorrichtung gemäß Anspruch 1, **dadurch gekennzeichnet, dass** die Bremsvorrichtung eine Wirbelstrombremse ist, das Arbeitsmedium ein elektrischer Strom ist und die Kupplung (4) elektromagnetisch betätigt ist.

3. Bremsvorrichtung gemäß Anspruch 1, **dadurch gekennzeichnet, dass** die Bremsvorrichtung ein hydrodynamischer Retarder mit einem mit Arbeitsmedium befüll- und entleerbaren Arbeitsraum (5) ist, das Arbeitsmedium eine Flüssigkeit, insbesondere Öl, Wasser oder ein Öl-Wasser-Gemisch ist, und die Kupplung (4) durch Druckbeaufschlagung mit dem Arbeitsmedium betätigt wird.

4. Bremsvorrichtung gemäß Anspruch 3, **dadurch gekennzeichnet, dass** die Kupplung (4) einen Kolben (4.1) umfasst, welcher in arbeitsmediumleitender Verbindung (11) mit dem Arbeitsraum (5) steht, so dass der Kolben (4.1) bei Befüllung des Arbeitsraums (5) mit Arbeitsmedium druckbeaufschlagt wird, wobei der Kolben derart verschiebbar ist, dass er bei Druckbeaufschlagung mit dem Arbeitsmedium zumindest mittelbar einen mechanischen Kuppeleingriff zwischen dem Lüfterrad (3) und dem Rotor (1) herstellt.

5. Bremsvorrichtung gemäß Anspruch 4, **dadurch gekennzeichnet, dass** der Kolben (4.1) als Ringkolben ausgebildet ist, dessen axiale Mittelachse mit der Drehachse des Rotors (1) zusammenfällt.

6. Bremsvorrichtung gemäß einem der Ansprüche 4 oder 5, **dadurch gekennzeichnet, dass** das Lüfterrad (3) eine Lüfterwelle (3.1) aufweist, die ein auf dieser verschiebbares Kuppelelement (4.2) in einer drehstarren Verbindung trägt, das einen Teil der Kupplung (4) definiert, wobei der Kolben (4.1) in Axialrichtung der Lüfterwelle (3.1) verschiebbar ist, und der Kolben (4.1) und das Kuppelelement (4.2) in Axialrichtung starr aneinander angeschlossen sind.

7. Bremsvorrichtung gemäß Anspruch 6, **dadurch gekennzeichnet, dass** der Kolben (4.1) und das Kuppelelement (4.2) mittels eines Axiallagers (4.3), insbesondere eines Axialwälzlagers, aneinander angeschlossen sind.

8. Bremsvorrichtung gemäß einem der Ansprüche 5 bis 7, **dadurch gekennzeichnet, dass** die Lüfterwelle (3.1) als Hohlwelle ausgebildet ist, welche die Rotorwelle (1.1) umschließt.

9. Bremsvorrichtung gemäß einem der Ansprüche 6 bis 8, **dadurch gekennzeichnet, dass** das Kuppelelement (4.2) in einer Schiebeverzahnung auf der Lüfterwelle (3.1) gelagert ist.

10. Bremsvorrichtung gemäß einem der Ansprüche 6 bis 9, **dadurch gekennzeichnet, dass** das Kuppelelement (4.2) ringförmig ausgebildet ist und auf einer dem Rotor (1) zugewandten Stirnseite einen Reibbelag (4.4) trägt.

11. Bremsvorrichtung gemäß einem der Ansprüche 6 bis 9, **dadurch gekennzeichnet, dass** die Lüfterwelle (3.1) mittels mindestens eines Lagers (6) vom Stator (2) innerhalb desselben getragen wird.

12. Bremsvorrichtung gemäß einem der Ansprüche 3 bis 11, **dadurch gekennzeichnet, dass** das Lüfterrad (3) stirnseitig des Stators (2) axial auf der entgegengesetzten Seite zu dem Rotor (1) angeordnet ist.

13. Bremsvorrichtung gemäß einem der Ansprüche 3 bis 12, **dadurch gekennzeichnet, dass** das Arbeitsmedium im Bremsbetrieb durch einen radial außerhalb des Arbeitsraumes (5) angeordneten Ringwärmetauscher (7) geleitet wird, welcher mittels des Lüfterrads (3) mit Kühlluft beaufschlagt wird.

14. Bremsvorrichtung gemäß einem der Ansprüche 3 bis 13, **dadurch gekennzeichnet, dass** in einer arbeitsmediumleitenden Verbindung (11) zwischen dem Arbeitsraum (5) und der Kupplung (4) ein Druckspeicher vorgesehen ist, welcher einen Druckabfall des Arbeitsmediums durch Entleerung des Arbeitsraumes im Bereich der Kupplung (4) verzögert.

15. Bremsvorrichtung gemäß einem der Ansprüche 1 bis 14, **dadurch gekennzeichnet, dass** weitere Aggregate, wie Messvorrichtungen, Verbraucher- und/oder Hilfsantriebe vorgesehen sind, die im Bremsbetrieb mittels der Kupplung (4) automatisch an den Rotor (1) in einer Triebverbindung angekoppelt werden.

## Claims

1. A braking apparatus;
1.1 comprising a rotor (1) and a stator (2);
1.2 the rotor (1) and the stator (2) are arranged in relation to one another in such a way and a working medium can be supplied or connected in such a way that during a braking operation a braking moment is transferred from the rotor (1) to the stator (2) when the working medium is supplied or connected;
**characterized by** the following features:
1.3 a fanwheel (3) is provided which can enter into and be disconnected from a drive connection with the rotor (1) by the activation and deactivation of a coupling (4);
1.4 the fanwheel (3) is arranged and positioned in such a way that it supplies a stream of cooling air to the braking device when the driven connection to the rotor (1) has been made;
1.5 the coupling (4) is arranged in such a way and supplied with working medium in such a way that the supply or connection and discharge or disconnection of the working medium will automatically activate and deactivate the coupling (4).

2. A braking apparatus according to claim 1, **characterized in that** the braking apparatus is an eddy current brake, the working medium is an electric current and the coupling (4) is actuated electromagnetically.

3. A braking apparatus according to claim 1, **characterized in that** the braking apparatus is a hydrodynamic retarder comprising a working chamber (5) that can be filled with a working medium or discharged, the working medium being a fluid, especially oil, water or an oil/water mixture, and the coupling (4) is actuated by pressurization with the working medium.

4. A braking apparatus according to claim 3, **characterized in that** the coupling (4) comprises a piston (4.1) which is in a connection (11) with the working chamber (5) so as to divert the working medium, so that the piston (4.1) is pressurized with the working medium when the working chamber (5) is filled, with the piston being displaceable in such a way that when pressurized with the working medium it will produce at least indirectly a mechanical coupling engagement between the fanwheel (3) and the rotor (1).

5. A braking apparatus according to claim 4, **characterized in that** the piston (4.1) is arranged as an annular piston whose axial central axis coincides with the rotational axis of the rotor (1).

6. A braking apparatus according to one of the claims 4 or 5, **characterized in that** the fanwheel (3) comprises a fan shaft (3.1) which carries a coupling element (4.2) in a torsionally rigid connection, which element is displaceable on the same and which connection defines a portion of the coupling (4), with the piston (4.1) being displaceable in the axial direction of the fan shaft (3.1), and the piston (4.1) and the coupling element (4.2) being rigidly connected to one another in the axial direction.

7. A braking apparatus according to claim 6, **characterized in that** the piston (4.1) and the coupling element (4.2) are connected to each other by means of an axial bearing (4.3), especially an axial rolling bearing.

8. A braking apparatus according to one of the claims 5 to 7, **characterized in that** the fan shaft (3.1) is arranged as a hollow shaft which encloses the rotor shaft (1.1).

9. A braking apparatus according to one of the claims 6 to 8, **characterized in that** the coupling element (4.2) is held in a displaceable gearing on the fan shaft (3.1).

10. A braking apparatus according to one of the claims 6 to 9, **characterized in that** the coupling element (4.2) is arranged to be annular and carries a friction lining (4.4) on a face side facing the rotor (1).

11. A braking apparatus according to one of the claims 6 to 9, **characterized in that** the fan shaft (3.1) is carried by the stator (2) within the same by means of at least one bearing (6).

12. A braking apparatus according to one of the claims 3 to 11, **characterized in that** the fan wheel (3) is arranged on the face side of the stator (2) axially on the opposite side towards the rotor (1).

13. A braking apparatus according to one of the claims 3 to 12, **characterized in that** the working medium is guided in braking operation through an annular heat exchanger (7) which is arranged radially outside of the working chamber (5) and is supplied with cooling air by means of the fanwheel (3).

14. A braking apparatus according to one of the claims 3 to 13, **characterized in that** a pressure accumulator is provided in a connection (11) guiding the working medium between the working chamber (5) and the coupling (4), which pressure accumulator delays a pressure drop of the working medium by discharging the working chamber in the region of the coupling (4).

15. A braking apparatus according to one of the claims 1 to 14, **characterized in that** further units such as measuring apparatuses, consumer and/or auxiliary drives are provided which ion braking operation are coupled by means of the coupling (4) automatically to the rotor (1) in a drive connection.

## Revendications

1. Dispositif de freinage
1.1 avec un rotor (1) et un stator (2) ;
1.2 le rotor (1) et le stator (2) sont disposés l'un par rapport à l'autre de telle manière et un fluide de travail peut être amené de telle manière qu'en mode de freinage, lorsque le fluide de travail est amené, le couple de freinage soit transmis du rotor (1) au stator (2) ;
**caractérisé en ce que :**
1.3 il est prévu une roue de ventilateur (3) qui peut, par l'activation et la désactivation d'un accouplement (4), être amenée en liaison motrice avec le rotor (1) ou écartée de celui-ci ;
1.4 la roue de ventilateur (3) est construite et positionnée de telle façon que lorsqu'elle se trouve en liaison motrice avec le rotor (1), elle amène un courant d'air de refroidissement au dispositif de freinage ;
1.5 l'accouplement (4) est disposé de telle manière et reçoit le fluide de travail de telle manière que l'amenée et l'évacuation ou la coupure du fluide de travail activent et désactivent automatiquement l'accouplement (4).

2. Dispositif de freinage selon la revendication 1, **caractérisé en** le dispositif de freinage est un frein à courant de Foucault, le fluide de travail est un courant électrique et l'accouplement (4) est à actionnement électromagnétique.

3. Dispositif de freinage selon la revendication 1, **caractérisé en** le dispositif de freinage est un retardateur hydrodynamique avec une chambre de travail (5) pouvant être remplie de fluide de travail ou vidée, le fluide de travail est un liquide, en particulier de l'huile, de l'eau ou un mélange d'huile et d'eau, et l'accouplement (4) est actionné par l'application d'une pression avec le fluide de travail.

4. Dispositif de freinage selon la revendication 3, **caractérisé en ce que** l'accouplement (4) comprend un piston (4.1) qui se trouve en liaison pour acheminer le fluide de travail (11) avec l'espace de travail (5), de sorte que le piston (4.1) est soumis à la pression du fluide de travail quand l'espace de travail (5) est rempli, le piston pouvant se déplacer de telle manière que sous l'action de la pression du fluide de travail, il crée au moins indirectement un accouplement mécanique entre la roue de ventilateur (3) et le rotor (1).

5. Dispositif de freinage selon la revendication 4, **caractérisé en ce que** le piston (4.1) est conformé comme un piston annulaire dont l'axe axial médian coïncide avec l'axe de rotation du rotor (1).

6. Dispositif de freinage selon l'une des revendications 4 ou 5, **caractérisé en ce que** la roue de ventilateur (3) présente un arbre de ventilateur (3.1) portant un élément d'accouplement (4.2) pouvant coulisser dessus dans une liaison rigide en rotation, qui définit une partie de l'accouplement (4), le piston (4.1) pouvant se déplacer dans le sens axial de l'arbre de ventilateur (3.1), et le piston (4.1) et l'élément d'accouplement (4.2) étant raccordés l'un à l'autre de façon rigide dans le sens axial.

7. Dispositif de freinage selon la revendication 6, **caractérisé en ce que** le piston (4.1) et l'élément d'accouplement (4.2) sont raccordés l'un à l'autre au moyen d'un roulement axial (4.3), en particulier d'un roulement axial à rouleaux.

8. Dispositif de freinage selon l'une des revendications 5 à 7, **caractérisé en ce que** l'arbre de ventilateur (3.1) est conformé comme un arbre creux qui entoure l'arbre du rotor (1.1).

9. Dispositif de freinage selon l'une des revendications 6 à 8, **caractérisé en ce que** l'élément d'accouplement (4.2) est supporté dans une denture de poussée sur l'arbre de ventilateur (3.1).

10. Dispositif de freinage selon l'une des revendications 6 à 9, **caractérisé en ce que** l'élément d'accouplement (4.2) est en forme d'anneau et porte sur sa face d'extrémité orientée vers le rotor (1) une garniture de friction (4.4).

11. Dispositif de freinage selon l'une des revendications 6 à 9, **caractérisé en ce que** l'arbre de ventilateur (3.1) est porté par le stator (2) à l'intérieur de celui-ci au moyen d'au moins un roulement (6).

12. Dispositif de freinage selon l'une des revendications 3 à 11 , **caractérisé en ce que** la roue de ventilateur (3) est disposée sur la face frontale du stator (2) du côté opposé dans le sens axial au rotor (1).

13. Dispositif de freinage selon l'une des revendications 3 à 12, **caractérisé en ce que** le fluide de travail est acheminé en mode de freinage à travers un échangeur de vapeur annulaire (7) disposé à l'extérieur de l'espace de travail (5) dans le sens radial, qui est exposé à de l'air de refroidissement au moyen de la roue de ventilateur (3).

14. Dispositif de freinage selon l'une des revendications 3 à 13, **caractérisé en ce qu'**il est prévu dans la liaison acheminant le fluide de travail (11) entre l'espace de travail (5) et l'accouplement (4) un accumulateur de pression qui retarde une baisse de pression du fluide de travail par la vidange de l'espace de travail au niveau de l'accouplement (4).

15. Dispositif de freinage selon l'une des revendications 1 à 14, **caractérisé en ce que** sont prévus d'autres groupes tels que des dispositifs de mesure, des consommateurs et/ou des auxiliaires, qui sont automatiquement couplés en liaison active avec le rotor (1) au moyen de l'accouplement (4) en mode de freinage:
